Europäisches Patentamt

European Patent Office

Office européen des brevets

(11) Publication number: **0 265 426**
**B1**

# (12) EUROPEAN PATENT SPECIFICATION

(45) Date of publication of patent specification: **18.10.89**

(21) Application number: **86901984.4**

(22) Date of filing: **11.03.86**

(86) International application number:
**PCT/HU86/00014**

(87) International publication number:
**WO 87/05586 24.09.87 Gazette 87/21**

(51) Int. Cl.⁴: **B 65 G 53/30**

(54) **ACTUATING DEVICE FOR PIPE-CHAMBER FEEDERS OF HYDRAULIC TRANSPORT EQUIPMENTS.**

(43) Date of publication of application:
**04.05.88 Bulletin 88/18**

(45) Publication of the grant of the patent:
**18.10.89 Bulletin 89/42**

(84) Designated Contracting States:
**DE GB IT**

(56) References cited:
**US-A-3 774 971**
**US-A-4 082 367**

**Technologie de l'hydraulique (pages 188-196)**

(73) Proprietor: **Központi Bányászati Fejlesztési Intézet**
**Varsányi Irén u. 40-44.**
**H-1027 Budapest (HU)**
(73) Proprietor: **HEVES MEGYEI TANACSI EPITOIPARI VALLALAT**
**Sas ut 94**
**H-3301 Eger (HU)**

(72) Inventor: **KOCSANYI, László**
**Vörös Hadsereg útja 113/A**
**H-1021 (HU)**
Inventor: **ILLES, Károly**
**Zichy Jeno u. 43**
**H-1066 (HU)**
Inventor: **AJTAI, László**
**Németvölgyi út.28/A**
**H-1126 Budapest (HU)**

(74) Representative: **Uri, Peter Alexander, Dipl.-Ing. et al**
**Patentanwälte Strohschänk, Uri & Strasser**
**Innere Wiener Strasse 8**
**D-8000 München 80 (DE)**

# Description

The invention relates to a pipe-chamber feeder for hydraulic transport equipments for transporting slurry containing a solid material and water as carrier liquid, said pipe-chamber feeder having a water emptying duct connected to the pipe-chambers, main closing appliances in ducts connected to the pipe-chambers, auxiliary closing appliances in connection with the said water emptying duct, a high-pressure pump for delivering purewater into the pipe-chambers, a pure-water pipe for the said high-pressure pump, and a pressure equalizer pipe communicating with the high-pressure pump and with the auxiliary closing appliances.

Such pipe-chamber feeders are used for conveying solid materials, e.g. coal or slag in the form of a slurry, and in practice such pipe-chamber feeders are generally of a tubular shape.

A pipe-chamber feeder according to the above defined kind, as acknowledged in the prior art portion of claim 1, is already known from US—A—4 082 367. This device is designed as a two-chamber-feeder in an attempt to shorten the length of the construction. These two chambers are operated in a cyclic order to provide for a continous flow of the slurry. Particularly, the pipe-chambers are connected with intermediate chambers which can be connected to the pipe-chamber or to a clear water basin or to one of two pumps, namely a charging pump and a high-pressure pump by means of corresponding locking means. Thereby it is possible that the intermediate chamber can receive the charging current arriving during the changeover, avoiding a loss of time and increasing the delivery output.

The function of a chamber (pipe-chamber) feeder consists of the periodical alternate filling of the chambers with slurry at low pressure and of emptying them at high pressure. While performing this function, the closing appliances, especially valves or sliding valves have to be opened and closed in a certain sequence and at short time periods. This can be most advantageously performed in a manner as it is described in Hungarian Patent Specification No. 160 526 or in the corresponding German Patent Specification No. 1 756 591. If in any of the chambers the flow of slurry is stopped by closing the corresponding closing appliances, said chamber is then pressurized, which is relatively time-consuming when known prior-art equipment is used. For pressurizing, i.e. for increasing the pressure in a closed chamber, only a limited amount of water flow delivered by a pure water high pressure water pump can be used, namely an amount that would not cause considerable changes in both the quantity and the pressure of the water delivered by said pump.

From the above it is obvious that with known equipments a long-lasting time-consuming changeover does not only result from the slow motion of the closing appliances, but also from the fact that the above mentioned pressurizing of the pipe-chambers is also rather time-consuming, whereby the output of the equipment is considerably reduced. In addition, the pump filling slurry from the slurry tank into the pipe-chambers is prevented from working during the long changeover period so that, if large quantities of slurry continuously arrive, solid matter may deposit in the slurry tank that can lead to serious breakdowns.

In order to eliminate the above explained and other deficiencies of prior art, it is required to reduce the time needed for the changeover.

According to the invention this problem is solved by the features of the characterizing portion of claim 1, namely in that said pressure equalizer pipe consists of a small-diameter part and a large-diameter part, and that a connecting pipe starting from the boundary of said two pipe parts and having a larger diameter than that of the small-diameter part connects the equalizer pipe in a pressure storing unit containing an elastic means which is under the influence of said carrier liquid.

Thus, according to the invention the desired reduction of time for changeover is achieved by shortening the duration of pressure equalizing. According to a basic idea that has lead to the present invention it has been ascertained that if pressure is not equalized merely by a partial water-flow taken from the pressure pipe of the water pump during changeover, but if for this purpose—entirely or at least partly—stored high-pressure water is used, the pressurizing of the pipe-chambers can be performed very quickly, within a fraction of the time that has been needed according to prior art. In addition to this, it will be no more necessary to take a sudden large amount of water from the pressure pipe of the water-pump in a short period of time, which would negatively influence the operation of said pump.

Summing up the above, the essence of the invention is the application of a dashpot or any similar pressure storing unit disposed at the pressure equalizer pipe interconnecting the high-pressure pure-water-pipe of the filling pump with the auxiliary closing appliances, in which pressure storing unit the carrier liquid of the slurry is subjected to the effect of a gas or aircushion. In such a novel structure the water in the pressure storing unit will be re-pressurized during the intervals between two changeovers and such stored pressure can be applied to the pipe-chamber upon every changeover without any delay within a very short time.

In general, it is known that energy storing devices are suitable to accelerate hydraulic procedures, but up to now it never has been proposed to use them in connection with hydraulic transport equipments; moreover if such a proposal would exist, it would be necessary to find out where and how such a device should be used. Consequently, the inventive idea is firstly based on the recognition that energy storing devices should be used to design hydraulic transport equipments, and secondly on the finding that this energy or pressure storing apparatus should be mounted on the pipe connecting the high-pressure pump with the auxiliary closing valves.

This novel combination has the surprising effect that the above mentioned breakdowns resulting from sedimentation in the slurry tank are avoided.

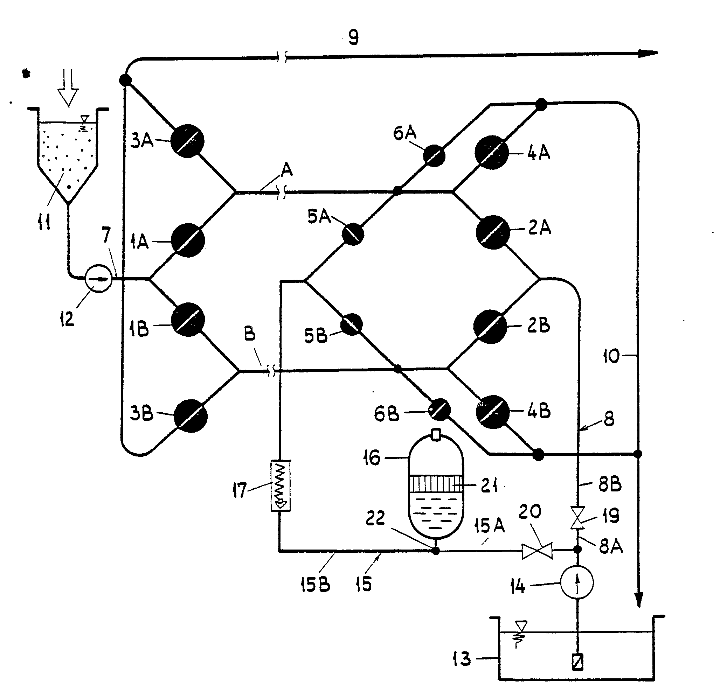

The invention will now be described in detail by way of example with reference to the accompanying drawing. The single figure of the drawing shows a hydraulic transport equipment having two pipe-chambers and a dashpot as an energy storing device.

In the equipment shown in the drawing, when being in operation, the feeder fills periodically the pipe-chambers with slurry at low pressure and it empties them at high pressure. Slurry is fed from a container 11 by a low-pressure slurry pump 12 via filling pipe 7 into one of the pipe-chambers, while the water having been left therein from the previous cycle of operation is displaced into a water emptying duct 10. Simultaneously, a pump 14 is pressing high-pressure pure water through a pure-water-pipe 8 into the other pipe-chamber and it expels thereform the slurry having been filled-in during the previous cycle into a slurry pipe 9.

The operative steps of changeover are outlined only briefly below, as in a close sense they do not belong to the scope of the invention and they correspond to the process of operation as described in the Hungarian Patent Specification No. 160 526 referred to above and which is incorporated by reference.

In the initial working phase the pipe-chamber $A$ is in the stage of filling, while pipe-chamber $B$ is emptied. Filling and emptying are taking place simultaneously with the same time interval. This can be achieved by measuring and controlling the filling and discharging flow. Filling and discharge are performed at considerably different pressures; with the value of filling pressure not exceeding 2 to 5 bars, the pressure of discharge may reach 100 to 150 bars depending from the required distance and head of delivery.

Following the above initial operative phase a changeover is to be carried out in such a way that considerable changes of the pressure in the pipe-chambers will not result in pressure and velocity fluctuations, and thus, swingings or hydraulic impacts towards the delivery pipe and the high-pressure pump are avoided.

Changeover is carried out as follows:

a/ Closing appliances 1A, 4A and 6A are closing. In the filled pipe-chamber $A$ the slurry stops to flow, while in pipe-chamber $B$ flow is not interrupted.

b/ Auxiliary appliance 5A is opening and simultaneously, the pump 14 applies pressure onto pipe-chamber $A$ by means of the partial flow taken from its pressure pipe. Duration of the process is determined by the pre-requisite that the partial flow that is taken through the flow-cross-section cleared by the closing appliance 5A should be kept at such a low value that neither the quantity nor the pressure of the water-flow of pump 14 should change considerably.

c/ When pressure in pipe-chamber $A$ is reaching the required pressure-level, the appliance 2A opens, the path of discharge water is cleared towards the pipe-chamber $A$, as long as the whole flow is passing through pipe-chamber $B$.

d/ The main closing appliance 3A opens while appliance 3B closes. Motion of the two main closing applicances is controlled so that the mutually opened cross-sections can be only larger but never smaller than that of one single appliance. Simultaneously, auxiliary closing appliance 5A closes.

e/ Appliances 2B and 5B are now closing, pipe-chamber $B$ does not communicate anymore with the high-pressure pure-water-pipe 8.

f/ Auxiliary closing appliance 6B is opening, whereby the pipe-chamber $B$ is relieved of pressure towards the water emptying duct 10.

g/ Main closing appliances 1B and 4B are opening and filling of the pipe-chamber $B$ begins.

The sequence of steps described above is then followed by the second phase of operation in the course of which pipe-chamber $A$ is emptied and pipe-chamber $B$, is filled. Hereon a repeated changeover occurs followed by the operational steps as specified above taking place in the same order of sequence, but in relation to the pipe-chambers, in a contrary sense.

The resulting duration of each of the changeovers occurring in the course of the regular working cycles is composed of the time required for the actuation of the closing appliances and of that required for the change of pressure which takes place through the small-sized auxiliary appliances. A reduction of this latter period of time is of utmost importance, as already mentioned before. Accordingly, the main objects of the present invention are to reduce the durations of pressure changes/pressure equalizations/, and simultaneously to provide for the prolongation of the useful life of the water-pumps of the equipments concerned. In order to achieve these, a pressure equalizer pipe 15 branching-off from the pure-water-pipe 8 of the water pump 14 consists of a little-diameter part 15A and a large-diameter part 15B. From the boundary of said two parts a connecting duct 22—having the same diameter as the large-diameter part 15B—is starting and it discharges into a dashpot 16.

Due to the fact that the part 15A is formed with a small diameter and it also contains a throttle-valve 20 being suitable for flow quantity control, it can be achieved by proper adjusting the possible passing flow that the liquid quantity allowed to flow through said part 15A cannot influence considerably the liquid flow of the pump 14, even if no pressure prevails in the after-coupled liquid storing dashpot 16. The dashpot 16—a part of which is filled with air or gas—communicates with the auxiliary appliances 5A and 5B via a check valve 17. When in operation, during the closed position of said closing appliances, in the dashpot 16 effective pressure is built up via the throttle-valve 20. The dashpot 16 is so dimensioned that it is able to discharge the liquid quantity needed for the pressure equalization of the pipe-chambers very quickly and at a slight pressure drop, while the check-valve 17, the pressure equalized pipe 15, as well as auxiliary closing appliances 5A, 5B are dimensioned in such a way that they are able to lead the pressure equalizing flow into the pipe-chambers in a very short time and without any significant loss of pressure.

Accordingly, in course of the step *b* of the above specified changeover process, when one of the auxiliary closing appliances 5A and 5B opens, in the pipe-changer in question pressure equalization takes place very quickly. At the same time, this fast pressure equalizing procedure will practically not influence the quantity or pressure of the flow of the filling pump 14 and of the pure-water-pipe 8, because—as already mentioned—not even in a pressure relieved state of the dashpot 16 could such a water quantity come out, which would considerably change the quantity or pressure of the flow of the water pump 14. In such a manner harmful water impacts and swingings can be surely avoided and in the course of chamber filling and emptying periods—being far longer than the changeover time—enough time is allowed for the dashpot to be recharged to normal working pressure.

By using the described method of pressure equalization, changeovers can be carried out with a more steady working pressure compared to the state achieved by applying the known prior art method according to the Hungarian Patent Specification No. 160 526. Compared to said method, considerable saving of time is provided by using the invention as described above.

According to the drawing, the dashpot 16 is made of metal and its piston 21 is contacting on one side the water coming from the small-diameter-part 15A of pressure equalizer pipe 15, while on the other side there is an air/or gas/cushion. Liquid storage under pressure can also be realized without a piston, in a container with elastic lining or walls in a manner known per se.

The part 15B of pipe 15 has a large diameter, that means in view of the specification and the claims that its diameter is larger than that of the small-diameter-part 15A. In practice, the ratio of diameters may lie in the range between 1:5 and 1:8.

Pressure and quantity of water delivered by pump 14 from water tank 13 are controlled by means of a slide valve 19. However, the procedure of regulation is unavoidably accompanied by a certain pressure drop; accordingly only a part 8A of the pure-water-pipe 8 is a full-pressure part, while the part after the slide valve 19 is a reduced-pressure part 8B. So it is considered as advantageous, if the pressure equalized pipe 15 starts from the /full-pressure/ part 8A of the pure-water-pipe 8.

## Claims

1. A pipe-chamber feeder for hydraulic transport equipments for transporting slurry containing a solid material and water as carrier liquid, said pipe-chamber feeder having a water emptying duct (10) connected to the pipe-chambers (A, B), main closing appliances (1A, 1B, . . .) in ducts connected to the pipe-chambers (A, B), auxiliary closing appliances (5A, 5B, 6A, 6B) in connection with the said water emptying duct (10), a high-pressure pump (14) for delivering pure-water into the pipe-chambers (A, B), a pure-water pipe (8) for the said high-pressure pump (14), and a pressure equalizer pipe (15) communicating with the high-pressure pump (14) and with the auxiliary closing appliances (5A, 5B, 6A, 6b), characterized in that said pressure equalizer pipe (15) consists of a small-diameter part (15A) and a large-diameter part (15B), and that a connecting pipe (22) starting from the boundary of said two pipe parts (15A, 15B) and having a larger diameter than that of the small-diameter part (15A) connects the equalizer pipe (15) in a pressure storing unit (16) containing an elastic means which is under the influence of said carrier liquid.

2. Pipe-chamber feeder as claimed in claim 1 in which the pressure storing unit consists of a dashpot (16) in which the elastic means is a gas cushion.

3. Pipe-chamber feeder as claimed in claim 1, in which a control organ (19) is provided in said pure-water pipe (8) and the pressure equalizer pipe (15) is connected to the pure-water pipe (8) at its full pressure part (8A) before the said control organ (19).

## Patentansprüche

1. Rohrkammer-Speiseeinrichtung für hydraulische Förderananlagen zum Transport von Brei, welcher ein festes Material und Wasser als Trägerflüssigkeit enthält, wobei die Rohrkammer-Speiseeinrichtung eine Wasserentleerungsleitung (10) besitzt, welche mit den Rohrkammern (A, B) verbunden ist, ferner Hauptsperrvorrichtungen (1A, 1B, . . .) in Leitungen, welche mit den Rohrkammern (A, B) verbunden sind, Hilfssperreinrichtungen (5A, 5B, 6A, 6B) in Verbindung mit der Wasserentleerungsleitung (10), eine Hochdruckpumpe (14) zur Lieferung von Reinwasser in die Rohrkammern (A, B), ein Reinwasserrohr (8) für die Hochdruckpumpe (14) und ein Druckausgleichsrohr (15), welches mit der Hochdruckpumpe (14) und den Hilfssperrvorrichtungen (5A, 5B, 6A, 6B) verbunden ist, dadurch gekennzeichnet, daß das Druckausgleichsrohr (15) aus einem Teil (15a) kleinen Durchmessers und einem Teil (15B) großen Durchmessers besteht, und daß ein Verbindungsrohr (22), das an der Grenze zwischen den beiden Rohrteilen (15A, 15B) beginnt und einen größeren Durchmesser besitzt als der Teil (15a) kleinen Durchmessers, das Ausgleichsrohr (15) mit einer Druckspeichereinheit (16) verbindet, welche eine elastische Einrichtung enthält, die unter dem Einfluß der Trägerflüssigkeit steht.

2. Rohrkammer-Speiseeinrichtung nach Anspruch 1, bei welcher die Druckspeichereinheit aus einem Dämpfertopf (16) besteht, in dem die elastische Einrichtung ein Gaskissen ist.

3. Rohrkammer-Speiseeinrichtung nach Anspruch 1, bei dem ein Steuerorgan (19) in dem Reinwasserrrohr (8) vorgesehen ist und das Druckausgleichsrohr (15) mit dem Reinwasserrohr (8) an seinem Teil (8A) mit vollem Druck vor dem Steuerorgan (19) verbunden ist.

**Revendications**

1. Appareil d'alimentation de chambre-conduite d'équipements de transport hydrauliques pour transporter de la boue contenant une matière solide et de l'eau comme liquide porteur, ledit appareil d'alimentation de chambre-conduite ayant un tuyau de vidange d'eau (10) relié aux chambres-conduites (A, B), des dispositifs principaux de fermeture (1A, 1B, . . .) dans les tuyaux reliés aux chambres-conduites (A, B), des dispositifs auxiliaires de fermeture (5A, 5B, 6A, 6B) en liaison avec ledit tuyau de vidange d'eau (10), une pompe à haute pression (14) pour envoyer de l'eau pure dans les chambres-conduites (A, B), un tuyau d'eau pure (8) pour ladite pompe à haute-pression (14), et un tuyau de régulation de pression (15) communicant avec la pompe à haute pression (14) et avec les dispositifs auxiliaires de fermeture (5A, 5B, 6A, 6B), caractérisé en ce que ledit tuyau de régulation de pression (15) se compose d'une partie de petit diamètre (15A) et d'une partie de grand diamètre (15B), et en ce qu'un tuyau de liaison (22) partant de la frontière entre lesdites deux pièces de tuyau (15A, 15B) et ayant un plus grand diamètre que la partie de petit diamètre, relie le tuyau de régulation (15) à une unité de réserve de pression (16) contenant un moyen élastique qui est sous l'influence dudit liquide porteur.

2. Appareil d'alimentation de chambre-conduite selon la revendication 1, dans lequel l'unité de réserve de pression consiste en un amortisseur à fluide (16) et en ce que le moyen élastique est un tampon de gaz.

3. Appareil d'alimentation de chambre-conduite selon la revendication 1, dans lequel un organe de commande (19), est prévu dans ledit tuyau d'eau pure (8) et le tuyau de régulation de pression (15) est relié au tuyau d'eau pure (8) à sa partie à pression maximale (8A) devant ledit organe de commande (19).